# EUROPÄISCHE PATENTSCHRIFT

(11) **EP 3 581 883 B1**
(45) Veröffentlichungstag und Bekanntmachung des Hinweises auf die Patenterteilung: **27.07.2022**
(21) Anmeldenummer: 19178400.8
(22) Anmeldetag: 05.06.2019
(51) Int. Cl.: G01B 11/24, G01M 13/021

(54) **VERFAHREN UND VORRICHTUNG ZUM OPTISCHEN VERMESSEN EINES ERSTEN OBERFLÄCHENABSCHNITTS EINES PRÜFLINGS**
METHOD AND DEVICE FOR OPTICALLY MEASURING A FIRST PART OF THE SURFACE OF A SAMPLE
PROCÉDÉ ET DISPOSITIF DE MESURE OPTIQUE D'UNE PREMIÈRE SECTION DE SURFACE D'UN ÉCHANTILLON

(30) Priorität: 12.06.2018 DE 102018114022
(43) Veröffentlichungstag der Anmeldung: 18.12.2019
(73) Patentinhaber: Fraunhofer-Gesellschaft zur Förderung der angewandten Forschung e.V., 80686 München (DE)
(72) Erfinder: FRATZ, Markus, 79199 Kirchzarten (DE); BERTZ, Alexander, 79194 Gundelfingen (DE); ANDERS, Joachim, 79111 Freiburg (DE); BECKMANN, Tobias, 79211 Denzlingen (DE)
(74) Vertreter: WSL Patentanwälte Partnerschaft mbB

(56) Entgegenhaltungen:
- DE-U1-202017 105 125
- US-A- 1 461 782
- US-A1- 2007 103 685
- US-A1- 2014 078 490
- US-B1- 6 825 937

## Beschreibung

Die vorliegende Erfindung betrifft ein Verfahren sowie eine Vorrichtung zum optischen Vermessen eines ersten Oberflächenabschnitts einer Oberfläche eines Prüflings.

Dazu weist das Verfahren die folgenden Schritte auf, Erzeugen von elektromagnetischer Strahlung mit einer Strahlungsquelle, Bestrahlen des ersten Oberflächenabschnitts mit der elektromagnetischen Strahlung und Erfassen einer Intensität der von dem ersten Oberflächenabschnitt reflektierten oder gestreuten elektromagnetischen Strahlung mit einem Detektor, wobei die Oberfläche des Prüflings einen zweiten Oberflächenabschnitt aufweist und wobei die Strahlungsquelle, der Detektor, der erste Oberflächenabschnitt und der zweite Oberflächenabschnitt derart zueinander angeordnet sind, dass eine Intensität der elektromagnetischen Strahlung, die nacheinander an dem ersten Oberflächenabschnitt und an dem zweiten Oberflächenabschnitt reflektiert oder gestreut wird, von dem Detektor erfassbar ist.

Entsprechend weist die Vorrichtung eine Strahlungsquelle, die so eingerichtet und angeordnet ist, dass mit der Strahlungsquelle elektromagnetische Strahlung erzeugbar und in Richtung des ersten Oberflächenabschnitts abstrahlbar ist, sowie einen Detektor auf, der so eingerichtet und angeordnet ist, dass mit dem Detektor die von dem ersten Oberflächenabschnitt reflektierte oder gestreute elektromagnetische Strahlung erfassbar ist.

Optische Messverfahren zum Erfassen von Oberflächenabschnitten von Prüflingen liefern in Abhängigkeit von dem konkreten Strahlengang des Messverfahrens, aber auch in Abhängigkeit von der Geometrie der zu vermessenden Oberfläche des Prüflings Messfehler bzw. Artefakte, welche auf Mehrfachreflexionen bzw. Mehrfachstreuung der elektromagnetischen Strahlung an mehreren Oberflächenabschnitten der Oberfläche des Prüflings zurückzuführen sind. Dabei ist die elektromagnetische Strahlung, welche von dem zu erfassenden ersten Oberflächenabschnitt reflektiert oder gestreut wird physikalisch zunächst nicht von derjenigen Strahlung zu unterscheiden, die an mehreren Oberflächenabschnitten nacheinander reflektiert oder gestreut wurde.

Um eine Mehrfachreflexion oder -streuung der elektromagnetischen Strahlung an den Oberflächenabschnitten des Prüflings zu vermeiden, ist es aus dem Stand der Technik bekannt, die gerade nicht zu vermessenden Oberflächenabschnitte des Prüflings mechanisch zu bearbeiten, z. B. aufzurauen, oder zu beschichten.

Aus der US 6,825,937 B1 ist eine Vorrichtung zur kontaktfreien, dreidimensionalen Vermessung von Gegenständen und ein Verfahren zum Bestimmen eines Systems von Koordinaten für Messpunkte für eine solche Vorrichtung bekannt. Die Vorrichtung und das Verfahren zeichnen sich dadurch aus, dass ein System von Koordinaten zur dreidimensionalen Einpassung der Werkstückgeometrie mit einer ersten Messung bestimmt wird. Ein Körper mit bekannten Abmessungen seiner Kanten oder Linien wird in irgendeiner Position auf der Drehscheibe angeordnet und während einer Umdrehung mit einem Triangulationssensor vermessen. Die Vorrichtung gemäß der US 6,825,937 B1 ist durch ihre minimale Konstruktion gekennzeichnet. Die geringe Anzahl von erforderlichen Bewegungen, z.B. eine Translationsbewegung des Triangulationssensors und eine Drehbewegung der Drehscheibe führen zur Bestimmung der Kontur eines Körpers mit einem minimalen Messfehler.

Aus der US 2014/0078490 A1 ist zudem eine Informationsverarbeitungsvorrichtung mit mindestens einer Projektionseinheit bekannt, die so eingerichtet ist, ein Lichtmuster auf einen Prüfling zu projizieren, mindestens einer Bildgebungseinheit, die so eingerichtet ist, dass sie ein Bild des Prüflings mit dem darauf projizierten Lichtmuster erfasst, einer Messeinheit, die so eingerichtet ist, dass sie einen Abstand der mindestens einen Projektionseinheit oder der Bildgebungseinheit von dem Prüfling basierend auf dem aufgenommenen Bild misst, einer Bestimmungseinheit, die so eingerichtet ist, dass sie bestimmt ob ein gemessener Abstand gültig ist und einer Steuereinheit, die so eingerichtet ist, dass sie eine Leuchtdichte des Lichtmusters reduziert, die in einem projizierten Lichtmuster enthalten ist, das auf eine Fläche projiziert wird.

Dabei hat es sich als nachteilig erwiesen, dass die aus dem Stand der Technik bekannten Verfahren zur mechanischen Bearbeitung und zum Strukturieren der Oberflächenabschnitte des Prüflings alle die Form und Güte der Oberfläche beeinflussen. Die bekannten Verfahren sind daher nicht mehr im eigentlichen Sinne zerstörungsfrei.

Demgegenüber ist es Aufgabe der vorliegenden Erfindung, ein Verfahren sowie eine Vorrichtung zum optischen Vermessen des ersten Oberflächenabschnitts einer Oberfläche des Prüflings bereitzustellen, welche die Form und Güte der Oberfläche des Prüflings unbeeinflusst lassen.

Zur Lösung zumindest einer der zuvor genannten Aufgaben wird erfindungsgemäß ein Verfahren gemäß des unabhängigen Anspruchs 1 zum optischen Vermessen eines Oberflächenabschnitts einer Oberfläche eines Prüflings vorgeschlagen, welches die Schritte aufweist: Erzeugen von elektromagnetischer Strahlung mit einer Strahlungsquelle, Bestrahlen des ersten Oberflächenabschnitts mit der elektromagnetischen Strahlung, Erfassen einer Intensität der von dem ersten Oberflächenabschnitt reflektierten oder gestreuten elektromagnetischen Strahlung mit einem Detektor, wobei die Oberfläche einen zweiten Oberflächenabschnitt aufweist und wobei die Strahlungsquelle, der Detektor, der erste Oberflächenabschnitt und der zweite Oberflächenabschnitt derart zueinander angeordnet sind, dass eine Intensität der elektromagnetischen Strahlung, die nacheinander an dem ersten Oberflächenabschnitt und an dem zweiten Oberflächenabschnitt reflektiert oder gestreut wird, von dem Detektor erfassbar ist, und Anordnen einer Blende zwischen dem ersten Oberflächenabschnitt und dem zweiten Oberflächenabschnitt derart, dass die elektromagnetische Strahlung nicht an dem zweiten Oberflächenabschnitt reflektiert oder gestreut wird, wobei die Oberfläche des Prüflings eine Mehrzahl von im Wesentlichen V-förmig zueinander angeordneten ersten und zweiten Oberflächenabschnitten aufweist und die Oberfläche des Prüflings bewegt wird, wobei durch die Bewegung der Oberfläche ein nacheinander erfolgender Eingriff zwischen der Blende und einer Mehrzahl von zweiten Oberflächenabschnitten synchronisiert wird.

Die grundlegende Idee der vorliegenden Erfindung beruht darauf, dass durch das gezielte Anordnen einer Blende zwischen dem ersten Oberflächenabschnitt und dem zweiten Oberflächenabschnitt Reflexe bzw. Streuung von dem zweiten Oberflächenabschnitt vollständig unterbunden wird, sodass nur von dem ersten, zu vermessenden Oberflächenabschnitt reflektierte oder gestreute Strahlung auf den Detektor gelangt.

Das Einbringen der Blende zwischen den ersten Oberflächenabschnitt und dem zweiten Oberflächenabschnitt weist den Vorteil auf, dass es die Form und die Güte der Oberflächenabschnitte des Prüflings nicht beeinflusst.

Dabei ist es für die vorliegende Erfindung zunächst einmal unerheblich, mit welcher Messtechnik bzw. mit welchem Messverfahren der erste Oberflächenabschnitt optisch vermessen wird. Infrage kommen insbesondere Interferometrie, vorzugsweise Speckle-Interferometrie oder chromatisch-konfokale Interferometrie, sowie Lasertriangulation.

Insbesondere geeignet ist das erfindungsgemäße Verfahren allerdings für Messverfahren, welche auf einer streuenden Eigenschaft des zu vermessenden ersten Oberflächenabschnitts beruhen und diese nutzen. Bei diesen Messverfahren, welche die Streuung der Oberflächen nutzen, lassen sich Mehrfachreflexionen/-streuungen nicht durch eine geometrische Variation der Beleuchtungssituation ausräumen, da die Strahlengänge nicht dem Reflexionsgesetz folgen. Ein Beispiel hierfür ist die Speckle-Interferometrie.

Entscheidend bei der Realisierung der vorliegenden Erfindung ist es, dass das Messverfahren eine aktive Beleuchtung aufweist, bei welcher der erste Oberflächenabschnitt mit elektromagnetischer Strahlung aus einer Strahlungsquelle beleuchtet wird und von diesem reflektierte oder gestreute Strahlung mit dem Detektor erfasst wird.

Es versteht sich, dass der Detektor in Abhängigkeit von dem verwendeten Messverfahren ein punktförmiger Detektor, wie z.B. ein Fotodiode, ein flächiger Detektor, wie z.B. eine CCD-Kamera, oder ein zeilenförmiger Detektor, wie z.B. eine CCD-Zeilenkamera, sein kann.

Eine Blende im Sinne der vorliegenden Anmeldung ist ein Bauteil, welches geeignet ist, den Strahlengang wirksam zu unterbrechen. Insbesondere sind aber die Blende und der Prüfling zweiteilig und der Prüfling dient nicht als Substrat für die Blende.

In einer Ausführungsform der Erfindung weist die Blende eine matte, die elektromagnetische Strahlung diffus streuende Oberfläche auf. In einer Ausführungsform der Erfindung besteht die Blende aus Kunststoff. In einer weiteren Ausführungsform der Erfindung ist die Blende schwarz gefärbt bzw. mit einer schwarzen Farbe beschichtet. In einer weiteren Ausführungsform der Erfindung ist die Blende mit einer Farbe gefärbt, welche zu der Farbe/ Wellenlänge der elektromagnetischen Strahlung komplementär ist, so dass die Blende die elektromagnetisches Strahlung effektiv absorbiert.

In einer Ausführungsform der Erfindung wird die Blende mit dem zweiten Oberflächenabschnitt in Eingriff gebracht. Auf diese Weise kann das Volumen zwischen dem ersten Oberflächenabschnitt und dem zweiten Oberflächenabschnitt bestmöglich für den Strahlengang zwischen der Quelle und dem Detektor genutzt werden, während gleichzeitig Mehrfachreflexe bzw. Mehrfachstreuungen vom ersten Oberflächenabschnitt und vom zweiten Oberflächenabschnitt nacheinander vermieden werden.

Es versteht sich, dass das erfindungsgemäße Verfahren dann zweckmäßig ist, wenr die Oberflächenstruktur des Prüflings so ausgebildet ist, dass Mehrfachreflexionen bzw. Mehrfachstreuungen tatsächlich dazu führen, dass die elektromagnetische Strahlung, welche an zumindest dem ersten Oberflächenabschnitt und dem zweiten Oberflächenabschnitt reflektiert oder gestreut wurde, zurück in den Detektor gelangen kann. Es versteht sich, dass derartige Oberflächenstrukturen insbesondere Strukturen sind, die in der Optik als Retroreflektoren oder Katzenaugen beschrieben werden. Gemäß der Erfindung sind daher der erste Oberflächenabschnitt und der zweite Oberflächenabschnitt im Wesentlichen V-förmig zueinander angeordnet, wobei die Flächennormalen der Oberflächenabschnitte zueinander hinzeigen. Dabei wird unter einer V-förmigen Anordnung jedwede Anordnung verstanden, bei welcher die beiden sich gegenüberliegenden Oberflächenabschnitte einen Winkel zueinander oder auch eine Schar von Winkeln zueinander einschließen. Dabei ist es insbesondere nicht erforderlich, dass die Oberflächenabschnitte eben sind.

Beispiele für Prüflinge, die V-förmig zueinander angeordnete erste und zweite Oberflächenabschnitte aufweisen, sind Zahnräder bzw. Zahnstangen. Es versteht sich, dass bei einem Zahnrad bzw. einer Zahnstange der erste Oberflächenabschnitt die Zahnflanke eines ersten Zahnes und der zweite Oberflächenabschnitt die gegenüberliegende Zahnflanke eines benachbarten Zahnes ist.

Ein weiteres Beispiel für einen Prüfling mit V-förmigen Oberflächenabschnitten ist ein Ventilgehäuse mit Ventilsitz, z.B. der Motorblock eines Kraftfahrzeugmotors. Ventilsitze sind typischerweise kegelstumpfförmig, wobei in jedem Querschnitt durch die Mittenachse des Ventilsitzes zwei V-förmig gegenüberliegende Oberflächenabschnitte vorhanden sind.

Die Oberfläche des Prüflings weist eine Mehrzahl von im Wesentlichen V-förmig zueinander angeordneten ersten und zweiten Oberflächenabschnitten auf, wobei die derart gebildete Struktur der Oberfläche vorzugsweise eine sich periodisch wiederholende Struktur ist.

Um einen Prüfling mit einer Mehrzahl von im Wesentlichen V-förmig zueinander angeordneten ersten und zweiten Oberflächenabschnitten vollständig optisch vermessen zu können, wird in einer Ausführungsform der Prüfling während der Messung oder zwischen zwei Messungen relativ zum Strahlengang bewegt. Dabei werden dann die einzelnen Zahnflanken der Zähne des Zahnrads oder der Zahnstange nacheinander vermessen. Die Bewegung kann beispielsweise bei einem Zahnrad eine Drehbewegung des Zahnrads oder bei einer Zahnstange eine Translationsbewegung der Zahnstange sein. Es gilt also jeweils die Zahnflanke des dem Zahn benachbarten Zahnes, dessen Zahnflanke gerade vermessen wird, abzudecken.

Dabei synchronisiert die Bewegung der Oberfläche des Prüflings einen nacheinander erfolgenden Eingriff zwischen der Blende und einer Mehrzahl von zweiten Oberflächenabschnitten.

Zumindest eine der zuvor genannten Aufgaben wird auch durch eine Vorrichtung gemäß des unabhängigen Anspruchs 6 zum optischen Vermessen eines ersten Oberflächenabschnitts einer Oberfläche eines Prüflings gelöst mit einer Strahlungsquelle, die so eingerichtet und angeordnet ist, dass mit der Strahlungsquelle elektromagnetische Strahlung erzeugbar und in Richtung des ersten Oberflächenabschnitts abstrahlbar ist, und einem Detektor, der so eingerichtet und angeordnet ist, dass mit dem Detektor die von dem ersten Oberflächenabschnitt reflektierte oder gestreute elektromagnetische Strahlung erfassbar ist, und einer Blende, die derart ausgestaltet ist, dass die Blende zwischen dem ersten Oberflächenabschnitt und einem zweiten Oberflächenabschnitt der Oberfläche des Prüflings anordenbar ist, sodass die Blende eine Reflexion oder Streuung der elektromagnetischen Strahlung an dem zweiten Oberflächenabschnitt verhindert, wobei die Blende derart ausgestaltet und angeordnet ist, dass die Blende von einer Bewegung einer Struktur der Oberfläche des Prüflings antreibbar ist, so dass die Blende automatisiert nacheinander zwischen einer Mehrzahl von ersten und zweiten Oberflächenabschnitten anordenbar ist.

Soweit im folgenden Aspekte der Erfindung im Hinblick auf die Vorrichtung zum optischen Vermessen des ersten Oberflächenabschnitts beschrieben werden, so gelten diese auch für das entsprechende Verfahren und umgekehrt. Soweit das Verfahren mit einer Vorrichtung gemäß dieser Erfindung ausgeführt wird, so weist diese Vorrichtung die entsprechenden Einrichtungen hierfür auf. Insbesondere sind aber Ausführungsformen der Vorrichtung zum Ausführen des zuvor beschriebenen Verfahrens geeignet.

Dabei bewirkt die Bewegung des Prüflings eine Bewegung und Positionierung der Blende zwischen den verschiedenen ersten und zweiten Oberflächenabschnitten des Prüflings.

Er derartige Automatisierung der Bewegung der Blende und damit der Synchronisierung der Bewegung der Blende und der Bewegung des Prüflings kann erfindungsgemäß durch eine Reihe von Ausführungsformen realisiert werden.

In einer Ausführungsform der Erfindung weist die Blende ein elastisch verformbares Material auf, sodass die Blende von einer Bewegung der Oberfläche des Prüflings angetrieben derart verformbar ist, dass sie zunächst außer Eingriff mit dem zweiten Oberflächenabschnitt und dann in Eingriff mit einem weiteren Oberflächenabschnitt kommt. Man kann sich anschaulich diese Ausführungsform der Blende vorstellen wie den elastischen Dorn eines Glücksrads, welcher die auf dem Rad befestigten Dorne abbremst und von diesen alternierend verformt wird.

In einer alternativen Ausführungsform der Erfindung ist die Blende zwischen einer Eingriffsposition und einer freigebenden Position bewegbar ausgestaltet ist, wobei die Blende federnd in die Eingriffsposition vorgespannt ist, so dass die Blende von der Bewegung der Struktur der Oberfläche des Prüflings entgegen der Vorspannung von der Eingriffsposition in die freigebende Position bringbar ist und durch die Vorspannung aus der freigebenden Position in die Eingriffsposition bringbar ist.

Der Schwenk- oder Translationsmechanismus ist dabei derart ausgestaltet, dass die Blende von der Bewegung der Struktur der Oberfläche des Prüflings entgegen der Vorspannung von der Eingriffsposition in die freigebende Position bringbar ist und durch die Vorspannung aus der freigebenden Position in die Eingriffsposition bringbar ist.

Dabei ist in einer Ausführungsform der Erfindung ein Zahnrad bzw. eine Zahnstange auf der Aufnahme aufgenommen.

In einer Ausführungsform ist die Blende um eine Schwenkachse zwischen der Eingriffsposition und der freigebenden Position verschwenkbar ausgestaltet. In einer Ausführungsform, in welcher die Vorrichtung eine Aufnahme für ein Zahnrad aufweist, ist die Schwenkachse vorzugsweise parallel zur Drehachse der Aufnahme. In einer Ausführungsform, in welcher die Vorrichtung eine Aufnahme für eine Zahnstange aufweist, ist die Schwenkachse vorzugsweise senkrecht zur Translationsrichtung angeordnet. Ist in einer Ausführungsform der Erfindung insbesondere das Zahnrad oder die Zahnstange schrägverzahnt, so kann es sinnvoll sein, wenn die Schwenkachse nicht parallel zur Drehachse der Aufnahme für das Zahnrad bzw. nicht senkrecht zur Translationsrichtung der Zahnstange ausgerichtet ist. In einer Ausführungsform der Erfindung ist vielmehr die Schwenkachse parallel zum Schrägungswinkel der Zähne eines schrägverzahnten Zahnrads oder einer schrägverzahnten Zahnstange ausgerichtet.

Darüber hinaus ist in einer Ausführungsform mit einer Aufnahme für ein Zahnrad und einem auf dem der Aufnahme aufgenommenen Zahnrad die Blende um eine Schwenkachse zwischen der Eingriffsposition und der freigebenden Position verschwenkbar angeordnet, wobei die Schwenkachse derart angeordnet ist, dass in der Eingriffsposition ein Winkel zwischen einerseits einer Verbindungslinie zwischen der Schwenkachse und einer Zahnspitze des Zahns im zweiten Oberflächenabschnitt und andererseits einer Tangente an den Wälzkreis des Zahnrads an diesem Zahn kleiner oder gleich dem Eingriffswinkel des Zahnrads ist.

Es versteht sich, dass die Blende in einer Ausführungsform eine Negativform einer Zahnflanke, welche den zweiten Oberflächenabschnitt im Sinne der vorliegenden Anmeldung bildet, eines Zahnrads oder einer Zahnspange aufweist.

In einer weiteren Ausführungsform hat die Blende die Negativform eines Zahns mit zwei Zahnflanken eines Zahnrads oder einer Zahnstange aufweist, wobei die erste Zahnflanke einen ersten Oberflächenabschnitt im Sinne der vorliegenden Anmeldung bildet und die zweite Zahnflanke einen zweiten Oberflächenabschnitt im Sinne der vorliegende Anmeldung.

Weitere Vorteile, Merkmale und Anwendungsmöglichkeiten der vorliegenden Erfindung werden anhand der folgenden Beschreibung von Ausführungsformen davon und der dazugehörigen Figuren deutlich.
- **Figur 1**: ist die weggebrochene schematische Ansicht einer Anordnung zum Vermessen eines Zahnrads aus dem Stand der Technik.
- **Figur 2**: ist eine weggebrochene schematische Ansicht einer erfindungsgemäßen Anordnung zum Vermessen eines Zahnrads.
- **Figur 3**: ist eine schematische Ansicht einer Variante der Ausführungsform aus Figur 2.
- **Figur 4**: ist eine schematische Ansicht der Ausführungsform aus Figur 3 mit zusätzlichen Hilfslinien zum Verständnis der vorliegenden Erfindung.

In den Figuren sind gleiche Elemente mit gleichen Bezugszeichen bezeichnet.

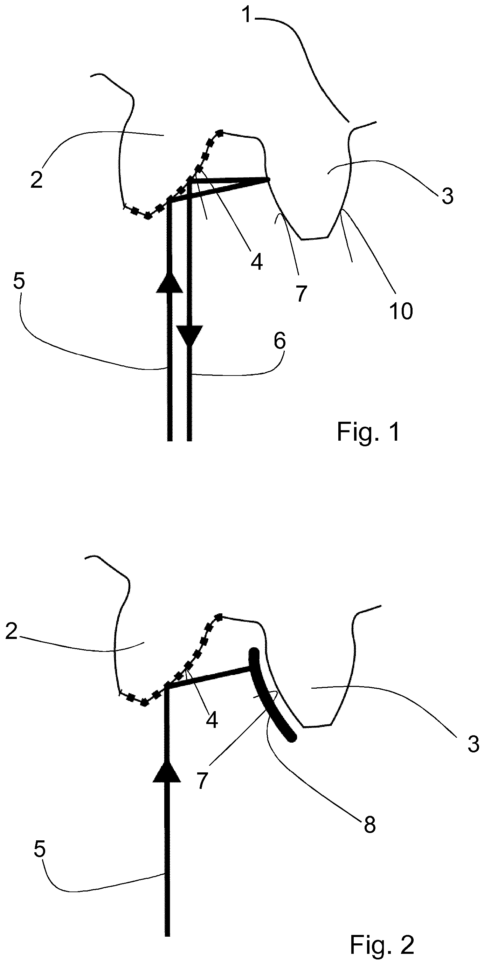

In den folgenden Betrachtungen von Varianten der vorliegenden Erfindung werden diese anhand eines Zahnrads als Prüfling im Sinne der vorliegenden Anmeldung erläutert. In den Figuren 1 und 2 ist das Zahnrad 1 jeweils weggebrochen dargestellt, da es für diese Betrachtungen nur auf zwei benachbarte Zähne 2, 3 ankommt.

Erfasst werden soll mithilfe einer Zahnflanke 4 des Zahns 2 des Zahnrads 1. Dabei soll das Profil der Zahnflanke 4 auf seine Bearbeitungsgüte und mögliche Abweichungen von der spezifizierten Form geprüft werden. Die Zahnflanke 4 bildet in dieser Ausführungsform den ersten Oberflächenabschnitt der Oberfläche des Zahnrads 1. Zum Vermessen wird Flanke 4 mit elektromagnetischer Strahlung 5 aus einer Quelle (in den Figuren nicht gezeigt) beleuchtet, wobei die Zahnflanke 4 im Objektpfad des Speckle-Interferometers angeordnet ist. Gleichzeitig mit der Beleuchtung wird die beleuchtete Oberfläche der Zahnflanke 4 mit einer CCD-Kamera (in den Figuren nicht gezeigt) beobachtet, wobei die elektromagnetische Strahlung 6, welche von der Zahnflanke 4 gestreut wird, auf der CCD-Kamera mit der elektromagischen Strahlung, welche den Referenzarm des Interferometers durchlaufen hat, überlagert wird.

Als problematisch erweist sich dabei bei Zahnrädern 1, dass die erste Zahnflanke 4 des zu vermessenden Zahns 2 einer zweiten Zahnflanke 7 des benachbarten Zahns 3 derart gegenüberliegend angeordnet ist, dass die beiden Zahnflanken 4, 7 im Wesentlichen V-förmig ausgebildet sind. Die CCD-Kamera erfasst daher nicht nur die unmittelbar vom ersten Oberflächenabschnitt, d.h. im Flächenabschnitt der ersten Zahnflanke 4, gestreute Strahlung, sondern auch Strahlung, die zunächst an der ersten Zahnflanke 4 zu der zweiten Zahnflanke 7 und von dort zurück über die erste Zahnflanke 4 in die Kamera gestreut wird. Diese mehrfach gestreute Strahlung ist nicht zu unterscheiden von derjenigen Strahlung, welche nach einmaliger Streuung an der ersten Zahnflanke 4 auf die CCD-Kamera fällt. Die mehrfach gestreute Strahlung sorgt für Artefakte im Interferogramm und führt zu Fehlern bei dessen Auswertung.

Erfindungsgemäß wird daher gemäß Speckle-Interferometrie die Topologie vorgeschlagen, eine Blende zwischen die beiden benachbarten Zähne 2, 3 des Zahnrads 1 einzubringen, wobei abweichend von der schematischen Darstellung aus Figur 2 die Blende 8 mit der zweiten Zahnflanke 7 des Zahnrads 1 in Eingriff, d.h. in Kontakt, ist. In der gezeigten Ausführungsform ist die Blende 8 ein Formkörper aus einem schwarzen Kunststoff mit einer matten, d. h. diffus streuenden, Oberfläche. Aus der Darstellung der Figur 2 ist unmittelbar ersichtlich, dass die Blende 8 Mehrfachstreuungen an den Zahnflanken 4, 7 verhindert.

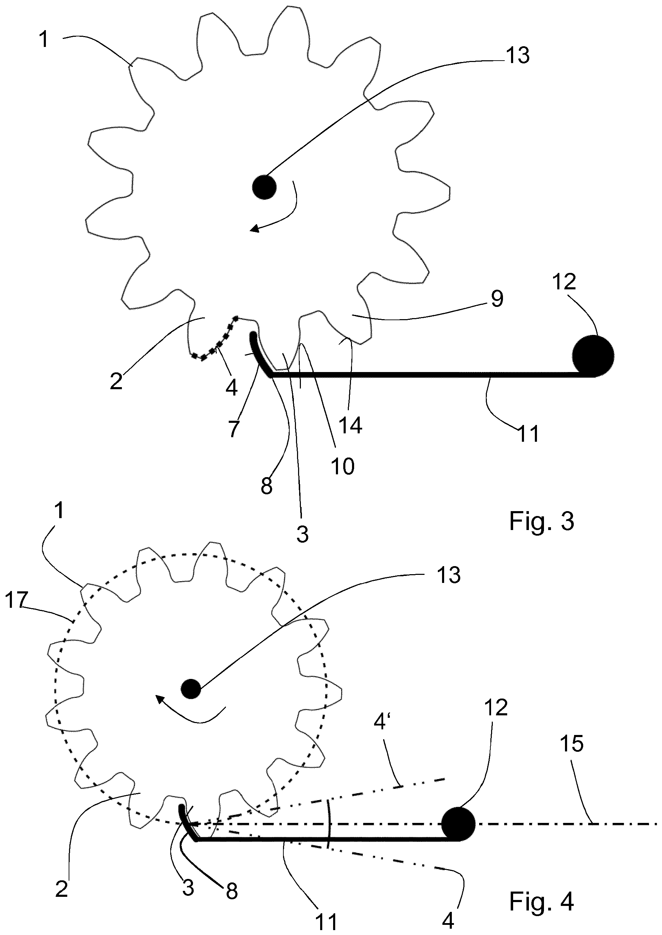

Es versteht sich, dass für eine Prüfung der Güte des Zahnrads 1 sämtliche Zahnflanken und Flächen jedes Zahns interferometrisch erfasst werden müssen. Nach der vollständigen Vermessung der Flanke 4 des ersten Zahns 2 muss daher das Zahnrad 1 weitergedreht werden, um die nächste Zahnflanke vermessen zu können. Es versteht sich, dass dabei auch die Blende 8 mit einer weiteren zweiten Zahnflanke 7, eines nächsten Zahnes 9 in Eingriff gebracht werden muss, so wie dies in der Darstellung aus Figur 3 gezeigt ist. In der gezeigten Ausführungsform wird das Zahnrad 1 nach der vollständigen Vermessung der ersten Zahnflanke 4 im Uhrzeigersinn weitergedreht, bis der beleuchtende Strahl 5 auf die Zahnflanke 10 des benachbarten Zahns 3 trifft. Bei der Vermessung der Zahnflanke 10 des benachbarten Zahns 3 muss wiederum der entgegen dem Uhrzeigersinn nächste Zahn 9 mithilfe der Blende 8 abgedeckt werden.

Für einen automatisierten Abdeckvorgang des jeweils benachbarten Zahns bzw. derjenigen Zahnflanke, welche zu der zu vermessenden Zahnflanke im Wesentlichen V-förmig angeordnet ist, abzudecken, ist erfindungsgemäß der in den Figuren 3 und 4 dargestellte Mechanismus vorgesehen. Die Blende 8 ist über einen Arm 11 um eine Schwenkachse 12 verschwenkbar ausgestaltet. Dabei ist die Schwenkachse 12 parallel zur Drehachse 13 der Aufnahme für das Zahnrad 1. Die zu der Zahnflanke 7 zeigende Innenfläche der Blende 8 bildet eine Negativform der Zahnflanke 7 selbst. Eine Drehbewegung des Zahnrads 1 führt daher zu im Wesentlichen radial wirkenden Kräften auf die Blende 8, sodass diese in radialer Richtung von dem Zahn 3 abgehoben wird. In der dargestellten Ausführungsform der Figuren 3 und 4 ist der Arm 11 und damit die Blende 8 mithilfe einer auf der Schwenkachse 12 sitzenden Torsionsfeder in Richtung der Drehachse 13 vorgespannt.

Die federnde Vorspannung der Blende 8 in radialer Richtung bezogen auf die Drehachse 13 führt dazu, dass die Blende 8 in der in den Figuren 3 und 4 gezeigten Messposition mit der Zahnflanke 7, welche es abzudecken gilt, in Eingriff ist. Diese Position wird im Sinne der vorliegenden Anmeldung auch als Eingriffsposition bezeichnet. Dreht sich nun das Zahnrad 1 von der Aufnahme angetrieben im Uhrzeigersinn um die Drehachse 13, so bewirken die radialen Komponenten der von dem Zahn 3 auf die Blende 8 ausgeübten Kräfte, dass sich die Blende 8 in radialer Richtung an der Zahnflanke 7 entlang radial nach außen bewegt und schließlich von der Zahnflanke 7 abgehoben wird und über die Spitze des Zahns 3 hinwegrutscht. Die Position der Blende 8 beim Erreichen der Spitze des Zahnrads wird im Sinne der vorliegenden Anmeldung auch als die freigebende Position der Blende 8 bezeichnet. Beim Erreichen der folgenden Zahnlücke zwischen den Zähnen 3, 9 rutscht die Blende 8 von der Torsionsfeder in radialer Richtung hin zu der Drehachse 13 der Aufnahme für das Zahnrad 1 gedrückt in die Zahnlücke, bis die Blende 8 mit der Zahnflanke 14 des Zahns 9 in Eingriff ist und diesen abdeckt.

Figur 4 verdeutlicht die Konstruktion des Schwenkmechanismus der Blende 8.Damit die von dem sich drehenden Zahnrads eine ausreichend große Komponente in radialer Richtung auf die Blende 8 ausüben, ist in der in Figur 4 gezeigten Eingriffsposition der Blende 8 der Winkel α zwischen einerseits der Verbindungslinie 11 (fällt mit dem Arm zusammen) zwischen der Schwenkachse 12 und der Zahnspitze des von der Blende 8 abzudeckenden Zahns 3 und andererseits einer Tangente 15 an den Wälzkreis 16 des Zahnrads 1 an diesem Zahn 3 kleiner als der Eingriffswinkel des Zahnrads 1.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt, da der Schutzbereich der Erfindung nur durch die anhängigen Ansprüche definiert wird.

### Bezugszeichen

- 1: Zahnrad
- 2, 3, 9: Zahn des Zahnrads 1
- 4, 7, 10, 14: Zahnflanke der Zähne 2, 3, 9
- 5, 6: elektromagnetische Strahlung
- 8: Blende
- 11: Arm oder Verbindungslinie
- 12: Schwenkachse
- 13: Drehachse
- 15: Tangente am Wälzkreis 16
- 16: Wälzkreis

- α: Winkel

## Patentansprüche

1. Verfahren zum optischen Vermessen eines ersten Oberflächenabschnitts (4, 10) einer Oberfläche eines Prüflings (1) mit den Schritten
Erzeugen von elektromagnetischer Strahlung (5, 6) mit einer Strahlungsquelle, Bestrahlen des ersten Oberflächenabschnitts (4, 10) mit der elektromagnetischen Strahlung (5, 6),
Erfassen einer Intensität der von dem ersten Oberflächenabschnitt (4, 10) reflektierten oder gestreuten elektromagnetischen Strahlung (5, 6) mit einem Detektor, wobei die Oberfläche einen zweiten Oberflächenabschnitt (7, 14) aufweist und der erste und der zweite Oberflächenabschnitt im Wesentlichen V-förmig zueinander angeordnet sind und
wobei die Strahlungsquelle, der Detektor, der erste Oberflächenabschnitt und der zweite Oberflächenabschnitt derart zueinander angeordnet sind, dass eine Intensität der elektromagnetischen Strahlung (5, 6), die nacheinander an dem ersten Oberflächenabschnitt (4, 10) und an dem zweiten Oberflächenabschnitt (7, 14) reflektiert oder gestreut wird, von dem Detektor erfassbar ist und
Anordnen einer Blende (8) zwischen dem ersten Oberflächenabschnitt (4, 10) und dem zweiten Oberflächenabschnitt (7, 14) derart, dass die elektromagnetische Strahlung (5, 6) nicht an dem zweiten Oberflächenabschnitt (7, 14) reflektiert oder gestreut wird,
**dadurch gekennzeichnet, dass**
die Oberfläche des Prüflings (1) eine Mehrzahl von im Wesentlichen V-förmig zueinander angeordneten ersten und zweiten Oberflächenabschnitten (4, 10, 7, 14) aufweist und
die Oberfläche des Prüflings (1) bewegt wird, wobei durch die Bewegung der Oberfläche ein nacheinander erfolgender Eingriff zwischen der Blende (8) und einer Mehrzahl von zweiten Oberflächenabschnitten (7, 14) synchronisiert wird.

2. Verfahren nach dem vorgehenden Anspruch, **dadurch gekennzeichnet, dass** die Blende (8) mit dem zweiten Oberflächenabschnitt (7, 14) in Eingriff gebracht wird.

3. Verfahren nach einem der vorgehenden Ansprüche, **dadurch gekennzeichnet, dass** die von der Mehrzahl von im Wesentlichen V-förmig zueinander angeordneten ersten und zweiten Oberflächenabschnitten gebildete Struktur der Oberfläche eine sich periodisch wiederholende Struktur ist.

4. Verfahren nach einem der vorgehenden Ansprüche, **dadurch gekennzeichnet, dass** der Prüfling (1) ein Zahnrad oder eine Zahnstage ist, wobei der erste Oberflächenabschnitt eine Zahnflanke eines ersten Zahns und der zweite Oberflächenabschnitt eine Zahnflanke eines zweiten, dem ersten Zahn benachbarten Zahns ist.

5. Verfahren nach einem der vorgehenden Ansprüche, **dadurch gekennzeichnet, dass** das Verfahren ein optisches Messverfahren umfasst, das ausgewählt ist aus Interferometrie, chromatisch-konfokale Interferometrie, Speckle-Interferometrie und Laser-Triangulation.

6. Vorrichtung zum optischen Vermessen eines ersten Oberflächenabschnitts (4, 10) einer Oberfläche eines Prüflings (1), wobei die Oberfläche des Prüflings (1) eine Mehrzahl von im Wesentlichen V-förmig zueinander angeordneten ersten und zweiten Oberflächenabschnitten (4, 10, 7, 14) aufweist, mit
einer Strahlungsquelle, die so eingerichtet und angeordnet ist, dass mit der Strahlungsquelle elektromagnetische Strahlung (5, 6) erzeugbar und in Richtung des ersten Oberflächenabschnitts (4, 10) abstrahlbar ist,
einem Detektor, der so eingerichtet und angeordnet ist, dass mit dem Detektor die von dem ersten Oberflächenabschnitt (4, 10) reflektierte oder gestreute elektromagnetische Strahlung (5, 6) erfassbar ist,
wobei die Vorrichtung so ausgestaltet ist, dass die Strahlungsquelle und der Detektor, derart zueinander angeordnet sind, dass eine Intensität der elektromagnetischen Strahlung (5, 6), die nacheinander an dem ersten Oberflächenabschnitt (4, 10) und an dem zweiten Oberflächenabschnitt (7, 14) reflektiert oder gestreut wird, von dem Detektor erfassbar ist,
und einer Blende (8), die derart ausgestaltet und angeordnet ist, dass die Blende (8) zwischen dem ersten Oberflächenabschnitt (4, 10) und dem zweiten Oberflächenabschnitt (7, 14) der Oberfläche des Prüflings (1) anordenbar ist, so dass die Blende (8) eine Reflexion oder Streuung der elektromagnetischen Strahlung (5, 6) an dem zweiten Oberflächenabschnitt (7, 14) verhindert,
**dadurch gekennzeichnet,**
**dass** die Vorrichtung eine Aufnahme aufweist, die derart ausgestaltet ist, dass der Prüfling (1) in Form eines Zahnrads motorisch angetrieben um eine Drehachse drehbar auf der Aufnahme aufnehmbar ist oder dass der Prüfling (1) in Form einer Zahnstange motorisch angetrieben in einer Translationsrichtung linear bewegbar auf der Aufnahme aufnehmbar ist, und
**dass** die Blende (8) derart ausgestaltet und angeordnet ist, dass die Blende (8) von einer Drehung oder linearen Bewegung einer Struktur der Oberfläche des Prüflings (1) antreibbar ist, so dass die Blende (8) automatisiert nacheinander zwischen einer Mehrzahl von ersten und zweiten Oberflächenabschnitten (7, 14) anordenbar ist.

7. Vorrichtung nach Anspruch 6, **dadurch gekennzeichnet, dass** die Vorrichtung so ausgestaltet ist, dass die Blende (8) mit dem zweiten Oberflächenabschnitt (7, 14) in Eingriff bringbar ist.

8. Vorrichtung nach Anspruch 6, **dadurch gekennzeichnet, dass** die Blende (8) ein elastisch verformbares Material aufweist, so dass die Blende (8) von einer Bewegung der Oberfläche des Prüflings (1) angetrieben derart verformbar ist, dass sie zunächst außer Eingriff mit dem zweiten Oberflächenabschnitt (7, 14) kommt und dann in Eingriff mit einem weiteren Oberflächenabschnitt kommt.

9. Vorrichtung nach Anspruch 6, **dadurch gekennzeichnet, dass** die Vorrichtung so ausgestaltet ist, dass die Blende (8) zwischen einer Eingriffsposition und einer freigebenden Position bewegbar ausgestaltet ist, wobei die Blende (8) federnd in die Eingriffsposition vorgespannt ist, so dass die Blende (8) von der Bewegung der Struktur der Oberfläche des Prüflings (1) entgegen der Vorspannung von der Eingriffsposition in die freigebende Position bringbar ist und durch die Vorspannung aus der freigebenden Position in die Eingriffsposition bringbar ist.

10. Vorrichtung nach Anspruch 9, **dadurch gekennzeichnet, dass** die Vorrichtung so ausgestaltet ist, dass die Blende (8) um eine Schwenkachse (12) zwischen der Eingriffsposition und der freigebenden Position verschwenkbar ausgestaltet ist.

11. Vorrichtung nach Anspruch 10, **dadurch gekennzeichnet, dass** die Vorrichtung ein Zahnrad (1) umfasst, welches auf der Aufnahme aufgenommen ist, wobei die Schwenkachse (12) derart angeordnet ist, dass in der Eingriffsposition der Blende (8) ein Winkel zwischen einerseits einer Verbindungslinie zwischen der Schwenkachse (12) und einer Zahnspitze eines Zahns mit dem zweiten Oberflächenabschnitt (7, 14) und andererseits einer Tangente (15) an den Wälzkreis (16) des Zahnrads an diesem Zahn kleiner oder gleich dem Eingriffswinkel des Zahnrads (1) ist.

12. Vorrichtung nach einem der Ansprüche 6 bis 11, **dadurch gekennzeichnet, dass** die Blende (8) eine Negativform einer Zahnflanke eines Zahnrads oder einer Zahnstange, vorzugsweise die Negativform eines Zahns mit zwei Zahnflanken eines Zahnrads oder einer Zahnstange, aufweist.

## Claims

1. A method for optically measuring a first surface portion (4, 10) of a surface of a specimen (1) with the following steps:
generating electromagnetic radiation (5, 6) with a radiation source, irradiating the first surface portion (4, 10) with the electromagnetic radiation (5, 6),
sensing an intensity of the electromagnetic radiation (5, 6) reflected or scattered by the first surface portion (4, 10) with a detector, wherein the surface comprises a second surface portion (7, 14) and the first and second surface portions are arranged so as to be substantially V-shaped in relation to one another, and
wherein the radiation source, the detector, the first surface portion, and the second surface portion are arranged in relation to one another such that an intensity of the electromagnetic radiation (5, 6) reflected or scattered sequentially on the first surface portion (4, 10) and on the second surface portion (7, 14) can be sensed by the detector, and
arranging an aperture (8) between the first surface portion (4, 10) and the second surface portion (7, 14) such that the electromagnetic radiation (5, 6) is not reflected or scattered on the second surface portion (7, 14),
**characterised in that**
the surface of the specimen (1) comprises a plurality of first and second surface portions (4, 10, 7, 14) arranged so as to be substantially V-shaped in relation to one another, and
the surface of the specimen (1) is moved, wherein a sequential engagement between the aperture (8) and a plurality of second surface portions (7, 14) is synchronized due to the movement of the surface.

2. The method according to the previous claim, **characterised in that** the aperture (8) is brought into engagement with the second surface portion (7, 14).

3. The method according to any one of the preceding claims, **characterised in that** the structure of the surface formed by the plurality of first and second surface portions arranged so as to be substantially V-shaped in relation to one another is a periodically repeating structure.

4. The method according to any one of the preceding claims, **characterised in that** the specimen (1) is a gear or rack, wherein the first surface portion is a tooth flank of a first tooth and the second surface portion is a tooth flank of a second tooth adjacent the first tooth.

5. The method according to any one of the preceding claims **characterised in that** the method comprises an optical measurement process selected from interferometry, chromatic confocal interferometry, speckle interferometry, and laser triangulation.

6. An apparatus for optically measuring a first surface portion (4, 10) of a surface of a specimen (1), wherein the surface of the specimen (1) plurality of first and second surface portions (4, 10, 7, 14) arranged so as to be substantially V-shaped in relation to one another, having
a radiation source configured and arranged such that electromagnetic radiation (5, 6) can be generated with the radiation source and radiated in the direction of the first surface portion (4, 10),
a detector configured and arranged such that the electromagnetic radiation (5, 6) reflected or scattered by the first surface portion (4,10) can be sensed with the detector,
wherein the apparatus is configured such that the radiation source and the detector are arranged to one another such that an intensity of the electromagnetic radiation (5, 6) reflected or scattered sequentially on the first surface portion (4, 10) and on the second surface portion (7, 14) can be sensed by the detector,
and an aperture (8) configured and arranged such that the aperture (8) is arrangeable between the first surface portion (4, 10) and the second surface portion (7, 14) of the surface of the specimen (1) in such a way that the aperture (8) prevents a reflection or scattering of the electromagnetic radiation (5, 6) on the second surface portion (7, 14),
**characterised in that**
the apparatus comprises a receptacle configured such that the test specimen (1) in the form of a gear, being motorly driven, is rotatably receivable on the receptacle about an axis of rotation or that the test specimen (1) in the form of a rack, being motorly driven, is linearly moveably receivable on the receptacle in a direction of translation, and
that the aperture (8) is configured and arranged such that the aperture (8) is drivable by a rotation or linear movement of a structure of the surface of the specimen (1) such that the aperture (8) is automatically arrangeable sequentially between a plurality of first and second surface portions (7, 14).

7. The apparatus according to claim 6, **characterised in that** the apparatus is configured such that the aperture (8) can be brought into engagement with the second surface portion (7, 14).

8. The apparatus according to claim 6, **characterised in that** the aperture (8) comprises an elastically deformable material, such that the aperture (8) is driven by a movement of the surface of the specimen (1) such that it first comes out of engagement with the second surface portion (7, 14) and then comes into engagement with a further surface portion.

9. The apparatus according to claim 6, **characterised in that** the apparatus is configured such that the aperture (8) is movably configured between an engagement position and a releasing position, wherein the aperture (8) is spring-biased to the engagement position, such that the aperture (8) is bringable against the biasing by the movement of the structure of the surface of the specimen (1) from the engagement position into the releasing position and is bringable due to the biasing from the releasing position into the engagement position.

10. The apparatus according to claim 9, **characterised in that** the apparatus is configured such that the aperture (8) is pivotally configured about a pivot axis (12) between the engagement position and the releasing position.

11. The apparatus according to claim 10, **characterised in that** that the apparatus comprises a gear (1), which is received on the receptable, wherein the pivot axis (12) is arranged such that, in the engagement position of the aperture (8), an angle between a line of connection between the pivot axis (12) and a tip of a tooth having the second surface portion (7, 14) on the one hand and a tangent (15) to the pitch circle (16) of the gear on this tooth on the other hand is less than or equal to the engagement angle of the gear (1).

12. The apparatus according to any one of claims 6 to 11, **characterised in that** the aperture (8) has a negative shape of a tooth flank of a gear or rack, preferably the negative shape of a tooth having two tooth flanks of a gear or of a rack.

## Revendications

1. Procédé de mesure optique d'une première section de surface (4, 10) d'une surface d'un échantillon (1), comprenant les étapes consistant à :
générer un rayonnement électromagnétique (5, 6) à l'aide d'une source de rayonnement,
irradier la première section de surface (4, 10) avec le rayonnement électromagnétique (5, 6),
détecter une intensité du rayonnement électromagnétique (5, 6) réfléchi ou diffusé par la première section de surface (4, 10) à l'aide d'un détecteur, présentant une seconde section de surface (7, 14) et les première et seconde sections de surface étant agencées sensiblement en forme de V l'une par rapport à l'autre et
la source de rayonnement, le détecteur, la première section de surface et la seconde section de surface étant agencés les uns par rapport aux autres de manière à ce qu'une intensité du rayonnement électromagnétique (5, 6), qui est réfléchie ou diffusée successivement sur la première section de surface (4, 10) et sur la seconde section de surface (7, 14), puisse être détectée par le détecteur, et
agencer un diaphragme (8) entre la première section de surface (4, 10) et la seconde section de surface (7, 14) de telle manière que le rayonnement électromagnétique (5, 6) ne soit pas réfléchi ou diffusé sur la seconde section de surface (7, 14),
**caractérisé en ce que**
la surface de l'échantillon (1) comprend une pluralité de premières et secondes sections de surface (4, 10, 7, 14) agencées sensiblement en forme de V les unes par rapport aux autres, et
la surface de l'échantillon (1) est déplacée, une mise en prise successive entre le diaphragme (8) et une pluralité de secondes sections de surface (7, 14) étant synchronisée par le mouvement de la surface.

2. Procédé selon la revendication précédente, **caractérisé en ce que** le diaphragme (8) est mis en prise avec la seconde section de surface (7, 14).

3. Procédé selon l'une quelconque des revendications précédentes, **caractérisé en ce que** la structure de la surface formée par la pluralité de premières et secondes sections de surface agencées sensiblement en forme de V les unes par rapport aux autres est une structure répétée périodiquement.

4. Procédé selon l'une quelconque des revendications précédentes, **caractérisé en ce que** l'échantillon (1) est une roue dentée ou une crémaillère, la première section de surface étant un flanc de dent d'une première dent et la seconde section de surface est un flanc de dent d'une seconde dent adjacente à la première dent.

5. Procédé selon l'une quelconque des revendications précédentes, **caractérisé en ce que** le procédé comprend un procédé de mesure optique qui est choisi parmi l'interférométrie, l'interférométrie confocale chromatique, l'interférométrie de Speckle et la triangulation laser.

6. Dispositif de mesure optique d'une première section de surface (4, 10) d'une surface d'un échantillon (1), la surface de l'échantillon (1) comprenant une pluralité de premières et secondes sections de surface (4, 10, 7, 14) agencées sensiblement en forme de V les unes par rapport aux autres, avec :
une source de rayonnement, qui est installée et agencée de telle manière que le rayonnement électromagnétique (5, 6) puisse être généré à l'aide de la source de rayonnement et puisse être émis en direction de la première section de surface (4, 10),
un détecteur qui est configuré et agencé de telle manière que le rayonnement électromagnétique (5, 6) réfléchi ou diffusé par la première section de surface (4, 10) puisse être détecté par le détecteur,
le dispositif étant conçu de telle manière que la source de rayonnement et le détecteur sont agencés l'un par rapport à l'autre de telle manière qu'une intensité du rayonnement électromagnétique (5, 6), qui est réfléchi ou diffusé successivement sur la première section de surface (4, 10) et sur la seconde section de surface (7, 14), puisse être détectée par le détecteur,
et un diaphragme (8) qui est configuré et agencé de telle manière que le diaphragme (8) puisse être disposé entre la première section de surface (4, 10) et la seconde section de surface (7, 14) de la surface de l'échantillon (1), de telle manière que le diaphragme (8) empêche une réflexion ou une diffusion du rayonnement électromagnétique (5, 6) sur la seconde section de surface (7, 14),
**caractérisé en ce que**,
le dispositif comprend un logement qui est conçu de telle manière que l'échantillon (1) puisse être reçu sur le logement sous la forme d'une roue dentée entraînée par un moteur de manière à pouvoir tourner autour d'un axe de rotation ou que l'échantillon (1) puisse être reçu sur le logement sous la forme d'une crémaillère entraînée par un moteur de manière à pouvoir se déplacer linéairement dans une direction de déplacement, et
le diaphragme (8) est configuré et agencé de telle manière que le diaphragme (8) puisse être entraîné par une rotation ou un déplacement linéaire d'une structure de la surface de l'échantillon (1), de telle manière que le diaphragme (8) puisse être agencé de manière automatisée entre une pluralité de premières et de secondes sections de surface (7, 14) les unes derrière les autres.

7. Dispositif selon la revendication 6, **caractérisé en ce que** le dispositif est conçu de telle manière que le diaphragme (8) puisse être mis en prise avec la seconde section de surface (7, 14).

8. Dispositif selon la revendication 6, **caractérisé en ce que** le diaphragme (8) comprend un matériau élastiquement déformable, de telle manière que le diaphragme (8) puisse être déformé par un déplacement de la surface de l'échantillon (1) de telle sorte qu'il soit d'abord libéré de la seconde section de surface (7, 14) puis mis en prise avec une autre section de surface.

9. Dispositif selon la revendication 6, **caractérisé en ce que** le dispositif est conçu de telle sorte que le diaphragme (8) soit conçu de manière à pouvoir être déplacé entre une position de mise en prise et une position de libération, le diaphragme (8) étant précontraint élastiquement dans la position de mise en prise, de telle sorte que le diaphragme (8) puisse être amené de la position de mise en prise à la position de libération à l'encontre de la précontrainte par le déplacement de la structure de la surface de l'échantillon (1) et puisse être amené de la position de libération à la position de mise en prise par la précontrainte.

10. Dispositif selon la revendication 9, **caractérisé en ce que** le dispositif est conçu de telle manière que le diaphragme (8) soit conçu de manière à pouvoir pivoter autour d'un axe de pivotement (12) entre la position de mise en prise et la position de libération.

11. Dispositif selon la revendication 10, **caractérisé en ce que** le dispositif comprend une roue dentée (1) qui est logée sur le logement, l'axe de pivotement (12) étant agencé de telle sorte que dans la position de mise en prise du diaphragme (8), un angle entre, d'une part, une ligne de liaison entre l'axe de pivotement (12) et une pointe de dent d'une dent avec la seconde section de surface (7, 14) et, d'autre part, une tangente (15) au cercle primitif (16) de la roue dentée sur cette dent soit inférieur ou égal à l'angle de mise en prise de la roue dentée (1).

12. Dispositif selon l'une quelconque des revendications 6 à 11, **caractérisé en ce que** le diaphragme (8) présente une forme négative d'un flanc de dent d'une roue dentée ou d'une crémaillère, de préférence la forme négative d'une dent avec deux flancs de dent d'une roue dentée ou d'une crémaillère.
